# EUROPEAN PATENT SPECIFICATION

(11) **EP 0 428 394 B1**
(45) Date of publication and mention of the grant of the patent: **01.05.1996**
(21) Application number: 90312400.6
(22) Date of filing: 14.11.1990
(51) Int. Cl.: B29C 49/48, B29C 49/00, B29C 49/02, B65D 25/22

(54) **Container with a suspension grip and method of manufacturing the same**
Behälter mit einem Aufhängegriff und Verfahren zu seiner Herstellung
Récipient avec anse de suspension, et procédé pour sa fabrication

(30) Priority: 16.11.1989 JP 298274/89; 16.11.1989 JP 298275/89
(43) Date of publication of application: 22.05.1991
(73) Proprietor: MITSUI PETROCHEMICAL INDUSTRIES, LTD., Tokyo (JP)
(72) Inventor: Maeda, Seiki, c/o Mitsui Petrochemical, Ichihara-shi, Chiba-ken (JP)
(74) Representative: Senior, Alan Murray

(56) References cited:
- US-A- 4 038 006
- US-A- 4 395 378
- PATENT ABSTRACTS OF JAPAN vol. 12, no. 208 (M-709)(3055) 15 June 1988 & JP-A- 63 011 324 ( TOYO SEIKAN KAISHA )
- PATENT ABSTRACTS OF JAPAN vol. 11, no. 372 (M-648)(2819) 4 December 1987 & JP-A-62 146 612

## Description

This invention relates to a container with a suspension grip and a method of manufacturing the same and more particularly it relates to an infusion solution container to be used for drip transfusion of blood or drip infusion of a solution as well as to a method of manufacturing the same.

Conventionally, an infusion solution container to be used for drip transfusion of blood or drip infusion of a solution has to be held upside down so that the bottom of the container comes to the top and the solution outlet faces downward from the bottom for ease of giving blood or solution to the patient.

For manufacturing such a container, there has been known a hot blow molding method by means of which a heated and bottomed parison or preform is inflated by hot air blown into the preform.

The bottom of a preform is not sufficiently thick and normally carries a trace of a gate produced at the time of preparation of the preform.

Therefore, the bottom of the preform has to be pressed by means of a push rod while the entire preform is inflated, leaving no room for forming a grip on the bottom in terms of both time and space. Consequently, a grip has to be fitted later to the container if the container is required to have a grip by which it is suspended for use.

US-A-4 038 006 discloses a method of manufacturing a container having an integrally formed side handle. A preform is placed in a pre-blow mold having at its side a resin receptacle for forming the handle. Gas is then blown into the preform to blow mold an intermediate molded body. This intermediate molded body is then removed from the pre-blow mold and placed in a main mold having a cavity corresponding to the profile of the final container. This intermediate molded body is then blow molded to form the final container.

US-A-4 395 378 discloses a method of blow molding a container having an integral suspension tab. An injection molded preform having an integral tab of the size and dimensions required for the container tab is placed in a blow mold having a pocket for receiving the integral appendage. The preform is stretched until the appendage is received in the pocket in the mold wall and is then blown to form a container having a wall conforming to the interior of the blow mold.

According to the present invention there is provided a method of manufacturing a container having a suspension grip and using an apparatus comprising: a main blow metal mold having a barrel forming mold section and a grip protecting mold section the barrel forming mold section and the grip protecting mold section together defining a cavity corresponding to the profile of the container to be molded and the grip protecting mold section being provided at its front end with a grip protecting space and being axially slidable within the cavity; and a stretcher rod juxtaposed with the grip protecting mold section, the stretcher rod also being axially slidable within the cavity; the method comprising:
placing in the main blow mold an intermediate blow molded body having the grip formed at its bottom, the stretcher rod being introduced into the intermediate molded body and the grip being introduced into the grip protecting space of the grip protecting mold section; pinching the bottom of the intermediate molded body between the stretcher rod and the grip protecting mold section from inside and outside respectively; axially elongating the intermediate molded body by moving the stretcher rod and the grip protecting mold section downward at an identical rate; and blow molding the intermediate molded body into the container when the grip protecting mold section and the barrel forming mold section are combined together.

The intermediate body is preferably formed by placing a preform in a pre-blow metal mold having at its bottom a resin receptacle for forming the grip whereby to form the grip in said resin receptacle, and blow-molding the preform into the intermediate molded body in the pre-blow by blowing hot gas into the preform.

The step of main blow molding can thus be conducted without problem because it does affect the grip that has been formed in the course of pre-blow molding, the grip being completely protected by the grip protecting mold section. Furthermore, because the grip is formed at the time of preparation of the intermediate molded body, the bottom of the final container can be formed to its proper shape and to have a good appearance.

A method in accordance with the present invention will now be described, by way of example only, with reference to the accompanying drawings in which:
Fig. 1 is a front view of a preform suitable for use in the method of the present invention;
Fig. 2 is a side view of the preform of Fig. 1;
Fig. 3 is a sectional front view of a pre-blow metal mold;
Fig. 4 is a sectional side view of the pre-blow metal mold of Fig. 3;
Figs. 5-7 are a sequence of sectional side views of a main blow metal mold; and

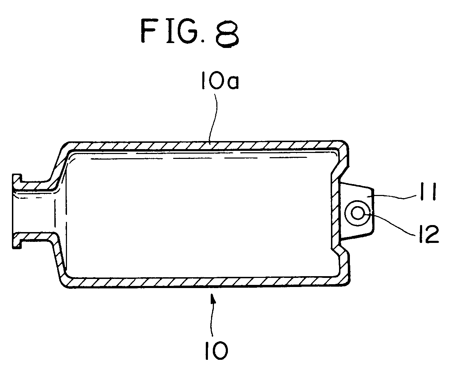

Fig. 8 is a sectional view of an embodiment of container capable of being produced by the method of the present invention.

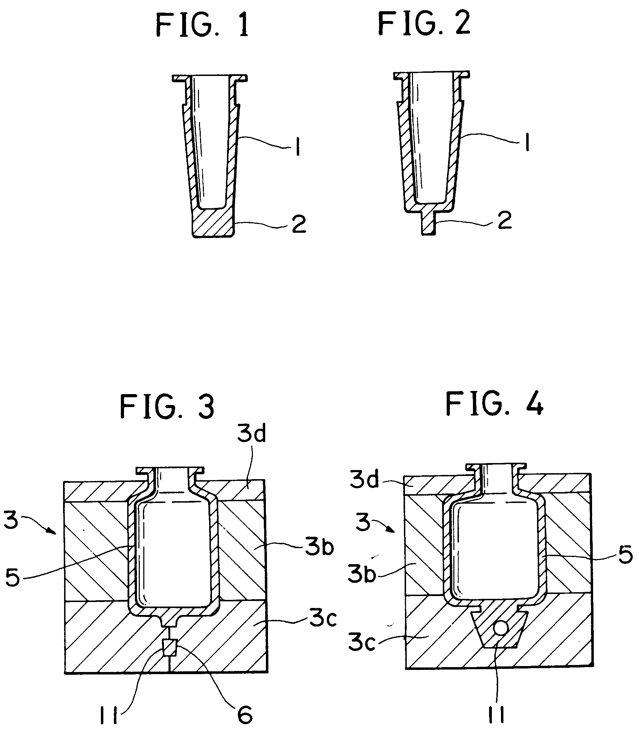

Figs. 1 and 2 show a bottomed preform 1 prepared by using an injection molding machine. The preform 1 is made of a polypropylene homopolymer with MFRO.5g/min and molded at an injection temperature of 220°C and a metal mold temperature of 20°C.

The pre-blow metal mold 3 comprises a shoulder forming openable mold section 3d, a barrel forming openable mold section 3b and a bottom forming openable mold section 3c, which bottom forming openable mold section 3c is divided into two halves, each being provided with a resin receptacle for grip formation 6 on the surface that faces its counterpart. A flat grip 11 having a suspension hole at the middle is produced from the resin receptacles for grip formation 6.

The most remarkable feature of the process using this mold configuration is that the grip 11 of a container according to the invention is formed in the step of pre-blow molding that precedes the step of main blow molding.

More specifically, a preform 1 is placed in position in the cavity of the pre-blow metal mold 3 as the shoulder forming openable mold section 3d is opened. Then an intermediate molded body 5 is formed from the preform 1 by blow molding. The pre-blow molding is conducted for regulation of temperature and consequently a container having a relatively high heat resistance can be obtained. The pre-blow molding is preferably conducted under the following conditions.

| | |
|---|---|
| pre-blow metal mold temperature: | 140°C |
| pre-blow elongation ratios: | vertically 1.0 time |
| | horizontally 1.2 times |
| pre-blow air pressure: | 5kg/cm² |

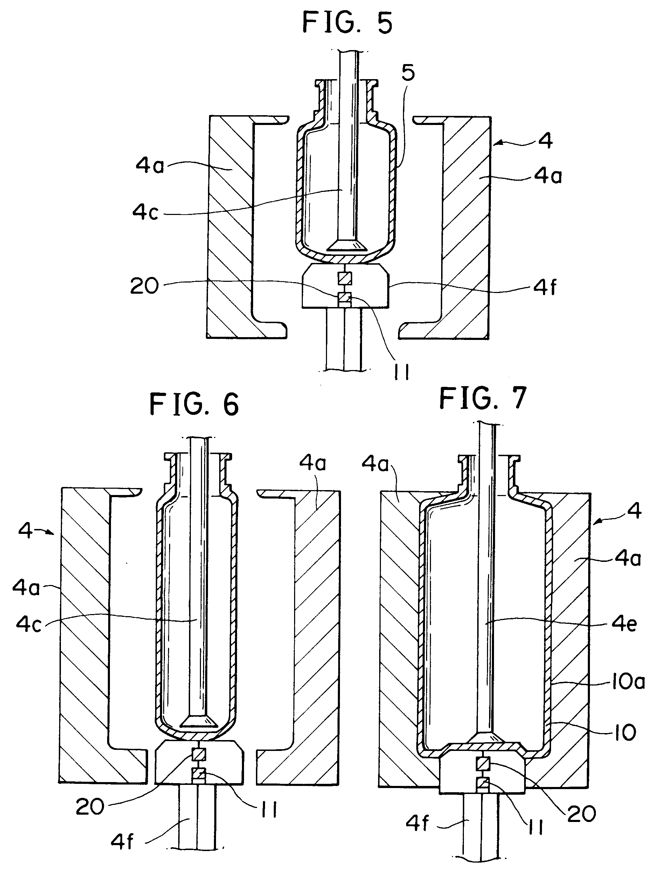

As illustrated in Figs. 5 through 7, the main blow metal mold 4 comprises a pair of barrel forming metal mold sections 4a. 4a and a grip protecting metal mold section 4f that also acts as a bottom forming metal mold section as well as a stretcher rod 4c juxtaposed with the grip protecting metal mold section 4f, of which the pair of barrel forming metal mold sections 4a, 4a and grip protecting metal mold section 4f are combined in position to define the cavity of the mold having a configuration that corresponds to the profile of the container to be formed.

Said grip protecting metal mold section 4f has the shape of a rod and is divided into two halves, each having a grip protecting space 20 for containing and protecting the molded suspension grip 11. Said grip protecting metal mold section 4f is axially movable with the cavity.

The stretcher rod 4c which is juxtaposed with the grip protecting metal mold section 4f is also axially movable within the cavity.

At the onset of the step of main blow molding, the intermediate molded body 5 obtained from the pre-blow molding step as described earlier is placed in position in the main blow metal mold 4. At this time, the suspension grip 11 is placed into the grip protecting spaces 20 while the stretcher rod 4c is led into the intermediate molded body 5 so that the bottom of the intermediate molded body 5 is pinched by the stretcher rod 4c and the grip protecting metal mold section 4f from inside and outside respectively (Fig. 5).

Then, the stretcher rod 4c is moved further down to push the inner surface of the bottom of the intermediate molded body 5 while the grip protecting metal mold section 4f is retracted downward to pull and consequently axially elongate the intermediate molded body 5 (Fig. 6). It should be noted that both the stretcher rod 4c and the grip protecting metal mold section 4f go down at an identical rate for elongation of the intermediate molded body 5.

Thereafter, the main blow metal mold 4 is closed and the intermediate molded body 5 is blown to form a final product or a container 10 comprising a container main body 10a having a barrel diameter of 90mm, a volume of 1100ml and a weight of 40g and a grip 11 which is integrally formed at the bottom of the container main body 10a (Figs. 17 and 10).

In an experiment, a container according to the invention was produced under the following conditions.

| | |
|---|---|
| main blow metal mold temperature: | 25°C |
| main blow elongation ratios: | vertically 1.6 times |
| | horizontally 3.3 times |
| main blow air pressure: | 10 kg/cm² |

The wall of the obtained container 10 had an even thickness and was beautifully transparent. Moreover, the container showed an excellent strength when it was dropped repeatedly. Since the grip 11 of the container 10 was provided with a suspension hole 12, it could be suspended with ease when used as a container for an infusion solution.

The container was a soft and flexible one that can be easily collapsed. Since a polyolefine resin material was used, it did not contain any plasticizer or ingredients that can easily elute and therefore was highly stable. It had a high heat resistivity and therefore could stand sterilization processes using hot steam.

## Claims

1. A method of manufacturing a container (10) having a suspension grip (11) and using an apparatus comprising: a main blow metal mold (4) having a barrel forming mold section (4a) and a grip protecting mold section (4f), the barrel forming mold section and the grip protecting mold section together defining a cavity corresponding to the profile of the container to be molded and the grip protecting mold section (4f) being provided at its front end with a grip protecting space (20) and being axially slidable within the cavity; and a stretcher rod (4c) juxtaposed with the grip protecting mold section (4f), the stretcher rod also being axially slidable within the cavity; the method comprising:
placing in the main blow mold (4) an intermediate blow molded body (5) having the grip (11) formed at its bottom, the stretcher rod (4c) being introduced into the intermediate molded body (5) and the grip (11) being introduced into the grip protecting space (20) of the grip protecting mold section (4f); pinching the bottom of the intermediate molded body (5) between the stretcher rod (4c) and the grip protecting mold section (4f) from inside and outside respectively; axially elongating the intermediate molded body (5) by moving the stretcher rod and the grip protecting mold section downward at an identical rate; and blow molding the intermediate molded body (5) into the container (10) when the grip protecting mold section (4f) and the barrel forming mold section (4a) are combined together.

2. A method as claimed in claim 1, wherein the intermediate molded body (5) is formed by placing a preform (1) in a pre-blow metal mold (3) having at its bottom a resin receptacle (6) for forming the grip (11) whereby to form the grip in the resin receptacle, and blow-molding the preform (1) into the intermediate molded body (5) in the pre-blow mold (3) by blowing hot gas into the preform (1).

3. A container made of synthetic resin material in accordance with the method of claim 1 or claim 2, the container (10) comprising a main body (10a) having a flat bottom, the suspension grip (11) being integrally formed with the flat bottom of the container and provided with a suspension hole (12) for use in suspending the container, the flat bottom being recessed relative to a surrounding ridge encircling both the flat bottom and the suspension grip and the suspension hole formed in the suspension grip extending beyond the ridge.

## Patentansprüche

1. Verfahren zur Herstellung eines Behälters (10) mit einem Aufhängegriff (11) unter Anwendung einer Vorrichtung, umfassend: eine Hauptmetallblasform (4) mit einem Stabformteil (4a) und einem Griffschutzformteil (4f), wobei der Stabformteil und der Griffschutzformteil zusammen einen Hohlraum definieren, der dem Profil des zu formenden Behälters entspricht und der Griffschutzformteil (4f) an seinem vorderen Ende mit einem Griffschutzraum (20) versehen ist und axial innerhalb des Hohlraums gleiten kann, und einen Streckstab (4c), der neben dem Griffschutzformteil (4f) angeordnet ist, wobei auch der streckstab axial innerhalb des Hohlraums gleiten kann, wobei das Verfahren umfaßt:
Einbringen eines halbfertigen blasgeformten Körpers (5) mit einem am Boden gebildeten Griff (11) in die Hauptblasform (4), wobei der Streckstab (4c) in den halbfertigen Formkörper (5) eingeführt wird und der Griff (11) in den Griffschutzraum (20) des Griffschutzformteils (4f) eingeführt wird, Einklemmen des Bodens des halbfertigen Formkörpers (5) zwischen dem Streckstab (4c) und dem den Griff schützenden Formteil (4f) von innen bzw. außen, axiales Verlängern des halbfertigen Formkörpers (5) durch Bewegen des Streckstabes und des den Griff schützenden Formteils nach unten mit gleicher Geschwindigkeit und Blasformen des halbfertigen Formkörpers (5) in dem Behälter (10), wenn der den Griff schützende Formteil (4f) und der stabformende Formteil (4a) miteinander verbunden sind.

2. Verfahren nach Anspruch 1, wobei der halbfertige Formkörper (5) geformt wird durch Eindringen einer Vorform (1) in eine Vorblasmetallform (3), die an ihrem unteren Ende einen Aufnahmebehälter (6) für Harz besitzt, zur Bildung des Griffs (11), wodurch der Griff in der Harzaufnahmeform gebildet wird und Blasformen der Vorform (1) zu dem halbfertigen Formkörper (5) in der Vorblasform (3) durch Einblasen von heißem Gas in die Vorform (1).

3. Behälter aus einem synthetischen Harzmaterial, hergestellt nach dem Verfahren des Ansprchs 1 oder Anspruchs 2, wobei der Behälter (10) einen Hauptteil (10a) mit einem flachen Boden umfaßt und der Aufhängegriff (11) integral mit dem flachen Boden des Behälters gebildet worden ist und mit einem Aufhängeloch (12) versehen ist zum Aufhängen des Behälters und wobei der flache Boden eingedrückt ist, bezogen auf einen umlaufenden Rand, der sowohl den flachen Boden als auch den Aufhängegriff umgibt und das Aufhängeloch in dem Aufhängegriff sich über den Rand hinaus erstreckt.

## Revendications

1. Procédé de fabrication d'un récipient (10) comportant un élément de suspension (11), ce procédé utilisant un appareil comprenant: un moule métallique principal de finition (4) comportant une partie moule (4a) de formation de partie cylindrique et une partie moule (4f) de protection d'élément de suspension, la partie moule de formation de partie cylindrique et la partie moule de protection d'élément de suspension définissant ensemble une cavité correspondant au profil du récipient à mouler et la partie moule (4f) de protection d'élément de suspension étant pourvue, à son extrémité avant, d'un espace (20) de protection d'élément de suspension et pouvant coulisser axialement à l'intérieur de la cavité; et une tige d'élongation (4c) juxtaposée à la partie moule (4f) de protection d'élément de suspension, la tige d'élongation pouvant aussi coulisser axialement à l'intérieur de la cavité; ce procédé comprenant:
la mise en place dans le moule principal de finition (4) d'un corps intermédiaire (5) moulé par soufflage et comportant l'élément de suspension (11) formé sur son fond, la tige d'étirage (4c) étant introduite dans le corps moulé intermédiaire (5) et l'élément de suspension (11) étant introduit dans l'espace (20) de protection d'élément de suspension de la partie moule (4f) de protection d'élément de suspension; le pincement du fond du corps moulé intermédiaire (5) entre la tige d'étirage (4c) et la partie moule (4f) de protection d'élément de suspension depuis l'intérieur et l'extérieur, respectivement; l'élongation, dans le sens axial, du corps moulé intermédiaire (5) par déplacement de la tige d'élongation et de la partie moule de protection d'élément de suspension vers le bas à une vitesse identique; et le moulage par soufflage du corps moulé intermédiaire (5) de manière qu'il forme le récipient (10) quand la partie moule (4f) de protection d'élément de suspension et la partie moule (4a) de formation de partie cylindrique sont combinées l'une avec l'autre.

2. Procédé selon la revendication 1, dans lequel on forme le corps moulé intermédiaire (5) par mise en place d'un préforme (1) dans un moule métallique d'ébauchage (3) comportant a sa base un réceptacle (6) de résine pour former l'élément de suspension (11) de manière à former ainsi l'élément de suspension dans le réceptacle de résine et par moulage par soufflage de la préforme (1) de manière à former le corps moulé intermédiaire (5) dans le moule d'ébauchage (3) en soufflant un gaz chaud dans la préforme (1).

3. Récipient en résine synthétique selon le procédé de la revendication 1 ou de la revendication 2, ce récipient (10) comprenant un corps principal (10a) comportant un fond plat, l'élément de suspension (11) faisant corps avec le fond plat du récipient et étant pourvue d'un trou de suspension (12) utilisé pour suspendre le récipient, le fond plat étant évidé par rapport à une nervure encerclant à la fois le fond plat et l'élément de suspension et le trou de suspension formé dans l'élément de suspension s'étendant au-delà de la nervure.
